# EUROPEAN PATENT SPECIFICATION

(11) **EP 3 232 818 B1**
(45) Date of publication and mention of the grant of the patent: **02.01.2019**
(21) Application number: 15798450.1
(22) Date of filing: 24.11.2015
(51) Int. Cl.: A23L 23/00, A23L 23/10, A23L 29/212, A23L 29/231, A23L 29/238, A23L 29/269, A23L 3/3535, A23L 29/00, A23L 29/20, A23L 27/00, A23L 27/40

(54) **FOOD PRODUCT**
LEBENSMITTELPRODUKT
PRODUIT ALIMENTAIRE

(30) Priority: 19.12.2014 EP 14199250
(43) Date of publication of application: 25.10.2017
(73) Proprietor: Unilever N.V., 3013 AL Rotterdam (NL); Unilever PLC, a company registered in England and Wales under company no. 41424, London EC4Y 0DY (GB)
(72) Inventor: UECKERT, Joerg, Erwin, 3133 AT Vlaardingen (NL)
(74) Representative: Tjon, Hon Kong Guno
(86) International application number: PCT/EP2015/077487
(87) International publication number: WO 2016/096335

(56) References cited:
- EP-A1- 1 369 043
- DATABASE WPI Week 201426 Thomson Scientific, London, GB; AN 2014-F53207 XP002739464, & WO 2014/046258 A1 (HOUSE FOODS GROUP INC) 27 March 2014 (2014-03-27) cited in the application
- PENG CHAO ET AL: "Chemical composition, antimicrobial property and microencapsulation of Mustard (Sinapis alba) seed essential oil by complex coacervation", FOOD CHEMISTRY, vol. 165, 2014, pages 560-568, XP029036442, ISSN: 0308-8146, DOI: 10.1016/J.FOODCHEM.2014.05.126

## Description

The present invention relates to a food product with allyl isothiocyanate.

### Background

Savoury products like bouillons, soups and sauces are well known food products prepared by the food industry. Savoury products can be divided in ready-to-eat products and concentrated products. Ready-to-eat soups merely require heating by the consumer and are quick and convenient. Concentrated soup products need to be diluted several times with hot water before consumption.

Dry concentrated soups have the advantage of low volume and good shelf stability. Liquid concentrated soups are more voluminous but are often preferred as they appear more fresh and of higher quality. However, the higher amounts of water e.g. at least 45 wt% decreases the microbial stability.

The antimicrobial effect of isothiocyanates in food products is known. However, its use is limited in food products with relatively high amounts of water. Aliphatic isothiocyanate (AITC) is barely water soluble and, therefore, there is a limit as to how much aliphatic isothiocyanate will be effective in products with e.g. at least 45% of water. WO201446258 describes that 100 ppm AITC has good anti-microbial effect in a concentrated savoury sauce with 4% oil, provided that the amount of moisture is at most 40% and the Aw at most 0.84. In examples with 50 wt% water or Aw of 0.86 an amount of 100 ppm AITC was ineffective. Other documents describe how the low efficacy of AITC in products with relatively high amounts water can be remedied by addition of other anti-microbial compounds.

For example WO201285881 combines AITC with acetic acid, propionic acid and green tea extracts in a ready-to-eat salsa sauce. However, most consumers would be reluctant to accept these ingredients in e.g. soup or a sauce. WO200898804 teaches that AITC can be effective in a low fat mayonnaise with 63% water provided that AITC is combined with an aromatic isothiocyanate such that at least 75ppm isothiocyanate is present and a pH as low as 3.2 is applied. However, aromatic isothiocyanates hydrolyze at a rate that is about ten-fold as compared with that of aliphatic isothiocyanates. Aromatic isothiocyanates, such as 4-HBITC, are particularly unstable in aqueous solutions at ambient temperatures and will, for the most part, break down into their hydrolysis by-products within about 8 to about 24 hours. Thus, aromatic isothiocyanates are not preferred in high water formulations. In addition the acidic taste of such low pH cannot be applied to many savoury products. WO200135769 and describes the combination of sorbates and benzoates with AITC. Similarly WO200539310 discloses in example 1 a combination of AITC and potassium sorbate. However, more and more consumers tend to dislike such preservatives.

The question arises if the effect of AITC itself can be optimised without adding other preservatives. When comparing compositions with more than 40 wt% of water Liu and Yang reported that AITC was more effective at 30% oil than 10% oil emulsions (Stability and Antimicrobial Activity of Allyl Isothiocyanate during Long-Term Storage in an Oil-in-Water Emulsion, Journal of Food Science Vol. 75, Nr. 5, 2010). However, 30% of oil limits the formulation flexibility in commercial soup formulations. Therefore there is a need to optimise AITC for food concentrates with relatively high amounts of water such that these concentrates are microbial stable against yeast and mould growth for at least 3 months.

### Summary of the invention

Surprisingly we have found that the effect of AITC can be optimised in the presence of relatively high amounts of water and an Aw of higher than 0.84 by a food concentrate according to the present invention. The present invention provides a food concentrate for preparing a ready-to-eat product after dilution with a hot aqueous phase, said concentrate having an Aw of 0.60 to 0.90 comprising
a) 45%-80 wt%, preferably at least 50 wt% of water by weight of the total food concentrate
b) at least 6.5 wt% of salt by weight of the total food concentrate ;
whereby the amount of salt is at least 10 wt% of salt when expressed by weight of the water content of the food concentrate;
c) 1-40 wt% of taste imparting ingredients by weight of the total food concentrate;
d) 5-55 ppm of allyl isothiocyanate (AITC);
e) 1-15 wt% preferably 2-10 wt% of oil by weight of the total food concentrate;
f) an effective amount of gelling system such that the concentrated food product is in the form of a gel.

The results show that the concentrate of the present invention in the form of a gel shows a remarkable efficiency of low amounts of AITC to inhibit growth for at least 3 months without the need for additional measure like lowering the amount of water to less than 40 wt%, lowering the Aw to at most 0.84, using very low pH, adding acids that may interfere with the taste, adding other preservatives like benzoate or sorbate. Thus, the present invention allows the food developer more freedom to formulate food concentrates.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Ratio's are weight/weight, unless indicated otherwise. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps. The reference in this specification to any prior publication (or information derived from it), or to any matter which is known, is not, and should not be taken as an acknowledgement or admission or any form of suggestion that that prior publication (or information derived from it) or known matter forms part of the common general knowledge in the field of endeavour to which this specification relates.

The invention is defined by the appended set of claims.

### Detailed description of the invention

### Food concentrate

The present invention relates to a food concentrate. For the purpose of the present invention a savoury food concentrate is intended to mean a food product that is designed to be consumed only after appropriate dilution with a hot aqueous phase. After the dilution the food concentrate results in a ready-to-eat product like a bouillon, a soup, a sauce, a gravy or a dish. In the present context, the term dilution is intended to encompass dilution, dissolving and dispersing as some ingredients in the concentrate may be said to be diluted while others could be said to rather dissolve/disperse. The aqueous phase may be water or part of a dish. For example when the concentrate is mixed with hot water it may result in a soup or gravy. On the other hand the concentrate can also be designed to prepare a dish like a stew whereby the concentrate is diluted into the dish during the preparation thereof. The formulation of the savoury food concentrate is adjusted to the desired dilution factor. For example, if the dilution is 10 fold, the ingredients in the concentrate will be 10 times higher than in the ready-to-eat product. The dilution rate is preferably at least 5 times, at least 10 times and at most 30 times. Diluting 20g of concentrate in 180g of aqueous phase would correspond to a dilution of 10 times. Thus, the present invention includes a process to prepare a ready-to-eat food product said process comprising the steps of
a) providing a food concentrate according to the invention
b) diluting said food concentrate with a hot aqueous phase with a dilution ratio of at least 5 times to form a ready-to-eat food product like a bouillon, a soup, a sauce, a gravy or a dish.

### Aliphatic isothiocyanate (AITC)

The food concentrate of the present invention comprises aliphatic isothiocyanate (AITC), preferably in an amount of at least 5 ppm, preferably at least 10 ppm, more preferably at least 15 ppm, preferably at most 55 ppm, preferably at most 35 ppm, more preferably at most 30ppm, most preferably at most 25 ppm by weight of the total food concentrate. AITC (which may be synthetically obtained or alternatively naturally obtained from, for example, horseradish, mustard (particularly black mustard), turnip, cabbage, brussels sprout, kale, collards, and cauliflower.

### Gel

The food concentrate of the present invention is in the form of a gel. As known in the art, at 20°C a gel is normally solid, i.e. not a pourable liquid. In normal use, a consumer cannot pour the food concentrate from its packaging, but can be removed as one piece, which maintains its shape (shape stable). Indeed, a solid gel is not considered to have a viscosity, which can be measured with for example a Brookfield viscosimeter, as the texture of the solid gel would break during measurement. This should be understood, as that the food concentrate in the form of a gel can deform under pressure or gravity to some extent, depending on how strong the gel is, but that the gel contains elasticity which brings it back in the original shape after removal of the pressure. The food concentrate is therefore preferably is an elastic gel. The gel might be a brittle gel, for example when agar-agar is used as a gelling agent. In case of a brittle gel, the gel has a breaking point. A breaking point can be analysed by a person skilled in the art.

The food concentrates of the present invention can be characterised by measuring the elastic modulus G' and the viscous modulus G" thereof. Elastic and viscous moduli are terms known in the art of rheology. They have been described for example in "Das Rheologie Handbuch, Thomas Mezger, Curt R. Vincentz-Verlag, Hannover, 2000". The elastic modulus G' of the food concentrate is preferably higher than 30 Pa, more preferably higher than 50 Pa, more preferably higher than 80 Pa. It is preferably lower than 50000 Pa, more preferably lower than 10000 Pa, even more preferably lower than 5000 Pa, more preferably lower than 1000 Pa, more preferably lower than 500 Pa, more preferably lower than 350 Pa.
The viscous modulus G" is preferably higher than 1 Pa, more preferably higher than 5 Pa, more preferably higher than 10 Pa.
The ratio of the elastic modulus to the viscous modulus G'/G" of the food concentrate is preferably higher than 1, more preferably higher than 2, even more preferably higher than 5. It is preferably lower than 1000, preferably lower than 200, even more preferably lower than 100, most preferably lower than 50.

Said values for the elastic modulus (G') and viscous modulus (G") can be obtained by performing a measurement in a standard rheometer, such as an Anton Paar Physica rheometer or a TA Instruments rheometer, mounted with a parallel plate geometry and applying the following experimental protocol:
1) Pre-heat the plate to 75°C
2) Melt the sample and load the liquid sample onto the plate,
3) Cool the sample to 5 °C, at a rate of 5 °C/min
4) Hold the sample at 5 °C for 15 minutes
5) Heat the sample to 20 °C and keep the sample at this temperature for 10 minutes
6) Record the values for the elastic modulus (G') and viscous modulus (G") 10 minutes after the sample has reached 20 °C, by oscillating the plate at a strain of 1% and a frequency of 1 Hz

A gel shows elastic deformation. This type of deformation is to a large extent reversible. For example, after reducing deforming pressure, e.g. from gravity or gentle pressure by a finger, the shape will reform to a large extent to its original form. In addition, at 20°C, a gel in the context of the present invention does not flow, like a liquid. Further, at 20°C, after cutting of the gel in some pieces, the pieces of gel cannot be substantially adhered and united by simple reassembling of the gel pieces, to form the original volume of the gel.

In contrast to a gel, a paste does not show elastic deformation but shows a plastic deformation behavior, at least, the plastic deformation is (much) higher than the elastic deformation. Thus, after deformation by pressure, a paste will hardly return towards its original shape, if at all. Also liquid products neither show elastic deformation, nor are they shape stable after removal from the package. It is therefore in the normal skill of the artisan, to assess whether a product is a gel or not.

A gel can be distinguished from a paste in the following manner using a texture analysis machine (TAX-T2) of Stable Micro Systems as known in the art. (e.g. WO 2012/097930). That method is based on a standard measurement called TPA (Texture Profile Analysis), as known for a skilled person and as described for example in "Gums and Stabilisers for the Food Industry 6", edited by G.O. Phillips, P.A. Williams and D.J. Wedlock (published by Oxford University Press, 1992). The product with minimum dimensions of 45 mm length / 30 mm width / 10 mm height, in the packaging (e.g. a plastic tub), is punched twice with a 5 mm diameter spherical (ball) probe (P/5S, stainless steel), to create a small deformation of the surface of the product by 2,5 mm. The TA-parameters are: Prespeed 1 mm/s, Test speed 0.5 mm/s, Post-Test speed 1 mm/s, Distance 2.5 mm, Second Distance 2.5 mm, Trigger Auto, Trigger Force 0.0 g, Trigger Distance 0.1mm.

For a gel, the force required for the second deformation step is close to the force required for the first deformation step. This is because of the elastic character of a gel. For a paste (which is not liquid), the force required for the second deformation step will be significantly lower, as in a paste the elasticity is low, if not absent. The time between the two measurements points is sufficient to allow a possible reformation of the gel structure after the first deformation. Typically, the time between the measurements is 10 seconds. For a gel, typically the force required for the second deformation is higher than 85%, preferably higher than 87%, most preferably higher than 90% of the force required for the first deformation.
Preferably, the food concentrate should also have a certain strength: preferably the strength should be such that the force (in gram) necessary for a plunger to penetrate 10 mm in a structured food concentrate is typically above 15g, preferably above 30g, more preferably above 50g. Moreover, low to no phase separation is desired.

Preferably, the strength measurement is carried out after 1 wk storage at ambient temperature (20°C) using a Texture Analyser TA - XT2 plus (Stable Micro Systems Ltd) with a fingerprobe of 12.7mm diameter. The sample is filled in a polypropylene container with the following dimensions:

| | | |
|---|---|---|
| • | bottom diameter: | 5 cm |
| • | top diameter: | 6.3 cm |
| • | height of the container: | 7.3 cm |

The applied filling height is 5 cm. The finger probe penetrates the sample 15mm in depth. The strength of the structured food concentrate corresponds to the force needed at 10mm depth.

| Measuring Program: Measuring tool: Cylindrical finger probe (12,7mm diameter) |
|---|
| Mode: Measure Force in Compression |
| Option : Return to Start |
| Pre - Test Speed: 1,0 mm/s |
| Test Speed: 0,5 mm/s |
| Post - Test Speed: 10 mm/s |
| Distance: 15 mm |
| Trigger Type: Auto - 0,5 g |

The food concentrate of the present invention preferably has a G', G", the ratio of G'/G" and/or strength as described above.

### Water

The food concentrate contains water. In the context of the present invention the water content in the food concentrate includes both water added as such and water as part of other ingredients like vegetables, unless otherwise indicated. E.g., the amount of water in the examples is added such. The amount of water in the food concentrate is preferably at least 45 wt%, preferably at least 50 wt%, more preferably at least 55 wt% and preferably at most 80 wt%, more preferably at most 65 wt%, even more preferably at most 55 wt%, based on total weight of the food concentrate. The water content in the food concentrate can be measured by any standard method including drying the food concentrate and comparing the weight before and after drying. Thus, when the amount of salt or gelling agent is expressed by weight of the water content of the food concentrate this includes both water added as such and water of other ingredients in the food concentrate. The reason is that the concentration is in the aqueous phase is thought to be a significant factor.

One advantage of the present invention is that the effect of AITC can be optimised even in food concentrates with Aw values of as high as 0.90. Although the level of salt must be high enough in the concentrate to deliver the desired taste in the ready-to-eat product, the present invention offers the possibility to formulate a concentrate with a decreased amount of salt in keeping with aim to lower daily salt intake while maintaining the microbial safety. The water activity of the food concentrate is preferably at most 0.90, more preferably at most 0.85 more preferably at most 0.80, preferably at least 0.65, more preferably at least 0.7. The experimental results exemplify another advantage. The present invention allows formulation of food products without the need to us relatively low pH. The food concentrate may have any pH, preferably the pH is at least 3.5, preferably at least 4, preferably at least 4.5, preferably at most 9, more preferably at most 8.

### Salt

The food concentrate preferably comprises at least 10 wt%, more preferably at least to 40 wt% of salt, based on the water content of the food concentrate. The water content of the food concentrate combines water added as water and water present in other ingredients of the food concentrate like fresh vegetables. The salt preferably comprises NaCl. The high level of salt is predominantly present to provide the desired taste impact after dissolution in a relatively high volume. As common in the art, the salt content, preferably NaCl, in this context is calculated as ((amount of salt)/(amount of salt + amount of water))*100%. At a level of higher than 26.5 wt% on water, NaCl starts to crystallise, and the food concentrate might contain some salt crystals. Preferably, the amount of salt in the food concentrate is from 15 wt% to 35 wt%, even more preferably from 20 wt% to 31 wt%, most preferably of from 20 wt% to 26.5 wt%, based on the weight of the water content of the food concentrate. The amount of NaCl in the food concentrate is preferably of from 10 wt% to 40 wt%, more preferably of from 10 wt% to 35 wt%, more preferably form 15 wt% to 35 wt%, more preferably of from 20 wt% to 31 wt%, even more preferably of from 20 wt% to 26.5 wt% on the weight of the water content of the food concentrate. The salt in the food concentrate is preferably dissolved.

In addition to the amount of salt expressed by weight of the water content of the food concentrate, the food concentrate is also characterised by the amount of salt expressed as wt% salt by weight of the total food concentrate. The food concentrate comprises at least 6.5 wt%, preferably at least 10 wt%, more preferably at least 12 wt% and preferably at most 30 wt% more preferably at most 25 wt% of salt by weight of the total food concentrate.

### Gelling system

The food concentrate of the invention contains a gelling system in an effective amount. Effective amount should be understood as common in the art, i.e. an amount sufficient to provide a gel as described above. The effective amount may depend on the type of gelling system which is chosen and is known to the skilled person or can be easily determined.

Preferably, the gelling system comprises- more preferably is - a gelling system selected from the group consisting of gelatinised modified starch, gelatine combined with gelatinised starch, xanthan gum combined with a glucomannan, xanthan gum combined with a galactomannan, xanthan gum combined with carrageenan, carrageenan, agar-agar, and mixtures thereof. These gelling systems proved advantageous in the context of the present invention, for example as these gelling systems can provide a shape stable gel in the context of this invention.
Gelling systems may comprise one or more polysaccharide gums. The total amount of polysaccharide gums taken together is preferably between 0.1 wt% and 10 wt%, based on the water content of the food concentrate, more preferably, the amount is from 0.2 to 6 wt%, even more preferably of from 0.3 to 3 wt%, as based on the water content of food concentrate. Preferably, the gelling system comprises more than 50 wt%, preferably more than 75 wt%, more preferably more than 90 wt%, most preferably more than 95 wt% (based on the weight of the gelling system) of one of the group of gelling systems consisting of modified starch, gelatine combined with starch, carrageenan, xanthan combined with a carrageenan, xanthan gum combined with a glucomannan, xanthan gum combined with a galactomannan and agar-agar, low-methoxy pectin. Most preferably, the gelling system comprises more than 50 wt%, preferably more than 75 wt%, more preferably more than 90 wt%, most preferably more than 95 wt% (based on the weight of the gelling system) of a gelling system consisting of xanthan gum combined with a galactomannan. If the gelling system comprises or is modified starch, it is present in an activated form, i.e. in the gelatinised form. Modified starch is preferably present in an amount of from 10 wt% to 30 wt% (weight % based on water content of the food concentrate).
If the gelling system comprises - more preferably is - xanthan gum combined with a glucomannan, like konjac mannan, the amount of xanthan gum is preferably present in an amount of from 0.1 wt% to 2 wt%, preferably in an amount of from 0.4 wt% to 1.8 wt%, even more preferably of from 0.6 wt% to 1.5 wt%, most preferably of from 0.6 wt% to 1 wt% (weight % based on the water content of the food concentrate). The glucomannan is preferably present in an amount of from 0.5 wt% to 4 wt%, more preferably of from 0.6 wt% to 2 wt%%, even more preferably of from 0.6 wt% to 1.5%, most preferably of from 0.6 wt% to 1 wt% (weight % based on water content of the food concentrate). If the gelling system comprises, more preferably, is a combination of gelatine and (gelatinised) starch, gelatine is preferably present in an amount of from 1.5 wt % to 30 wt%, more preferably in an amount of from 6 wt% to 20 wt%, even more preferably of from 12 wt% to 20 wt%, based on the water content of the food concentrate. The starch is preferably present in an amount of from 0.1 wt% to 10 wt%, more preferably from 1 wt % to 7 wt%, most preferably of from 3 wt% to 6 wt%, based on the water content of the food concentrate. Starch is present in the activated, i.e. gelatinised form. The gelling may comprise or consist of low-methoxy pectin (LM-pectin). LM pectin may be in amidated or unamidated form. It may be present in 0.6-10 wt% (based on the weight of the water content of the concentrate). Ca ions may be used to induce gel formation with LM pectin: preferably at a level of 1 to 10 wt% by weight of the LM-pectin. Alternatively, a pH of less than 3.5 may be used.
If the gelling system comprises, more preferably, is xanthan gum combined with a galactomannan, preferably, the combination of xanthan gum with galactomannan is present in an amount of from 0.1 wt% to 10 wt%, preferably in an amount of from 0.2 wt% to 7 wt%, more preferably in an amount of from 0.5 wt% to 5 wt%, most preferably in an amount of from 0.8 wt% to 3 wt%, based on the weight of the water content of the food concentrate.
Optimal results were observed for the combination of xanthan gum with galactomannan, when the gelling system comprises xanthan gum combined with anyone of the group consisting of locust bean gum, guar gum and mixtures thereof. Most preferably, the gelling system comprises the combination of xanthan gum and locust bean gum. This combination of xanthan gum with galactomannan, preferably with locust bean gum, is preferably present in an amount of from 0.1 wt% to 10 wt%, preferably in an amount of from 0.2 wt% to 7 wt%, more preferably in an amount of from 0.5 wt% to 5 wt%, most preferably in an amount of from 0.8 wt% to 3 wt, based on the weight of the water content of the food concentrate.

### Savoury taste enhancer

The food concentrate is preferably a savoury food concentrate, for example for preparing a bouillon, a soup, a sauce, a gravy or a seasoned dish. To contribute to the savoury character, the food concentrate of the present invention may further comprise a savoury taste enhancer selected from the group consisting of glutamate, 5'-ribonucleotides and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5 wt% to15 wt%, based on the weight of the total food concentrate. An individual taste enhancer as mentioned above may be present in an amount of less than 30 wt%, more preferably of between 0.1 wt% and 30 wt%, preferably in an amount of from 1 wt% to 25 wt%, most preferably in an amount of from 5 wt% to 15 wt%, based on the weight of the total food concentrate.

### Taste imparting ingredients

In the food concentrate according to the invention, it is preferred that taste-imparting ingredients are present. They may comprise one or more of yeast extract; hydrolyzed proteins of vegetables-, soy-, fish-, or meat-origin; liquid or dissolvable extracts or concentrates selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, lamb or chicken (and other fowl). Preferably the plant pieces comprise pieces selected from the group consisting of onion, garlic, leek, carrot, parsley, tomato and mixtures thereof. Preferably the amount of taste-imparting ingredients as set out above is from 1 wt% to 40 wt% (by weight of the total concentrate). More preferable, the amount of taste-imparting ingredients is present in amounts of from 3 wt% to 35 wt%, even more preferably from 5 wt% to 30% wt%, based on the weight of the total food concentrate.

### Oil

Oil is present in the food concentrate according to the invention in relatively low amounts. The term "oil" as used in the present application encompasses fat. The latter is defined as an oil which is solid at 20°C but liquid above its melting temperature. Preferably the oil comprises an oil selected from the group consisting of animal fat, butter fat, vegetable oil, fractions of animal fat, fractions of butter fat, fractions of vegetable oil, derivatives of animal fat, derivatives of butter fat, derivatives of vegetable oil and mixtures of all of before mentioned components. More preferably the oil comprises an oil selected from the group consisting of porc fat, chicken fat, beef fat, butter fat, fish oil, sun flower oil, olive oil, palm oil, palm kernel oil, corn oil, cottonseed cake oil, soy bean oil, arachide oil, sesame oil, canola oil, or rapeseed oil, their fractions, their derivatives and mixtures thereof. Higher amounts are preferably avoided as they lower the efficacy of AITC. Hence, preferably, the present invention relates to a food concentrate further comprising at most 15 wt%, more preferably at most 10 wt% of oil, even more preferably at most 8 wt% of oil, and preferably at least 1 wt%, more preferably at least 2 wt%, most preferably at least 5 wt% of oil based on the weight of the total food concentrate. It can be preferred that fat is absent in the food concentrate. The oil is usually present in small droplets in the food concentrate, preferably in emulsified form. This is obtained by applying sufficient shear during the preparation process. Any suitable emulsifier may be used, if needed.

### Process to prepare a food concentrate

The present invention includes a process to prepare a food concentrate as described herein. The process comprises the steps of
a) Mixing at least part of the water and gelling system of the food concentrate to form a mixture
b) Applying a heating step to the mixture to activate the gelling system
c) Optionally mixing any remaining ingredients of the food concentrate with the heated mixture
d) Optionally applying a second heating step
e) Allowing the heated mixture to cool to form a food concentrate in the form of a gel.

The temperature applied during either heating step will depend on the gelling system used. The temperature may be at least 50 °C, preferably at least 60 °C, preferably at least 70 °C preferably at most 100 °C, more preferably at most 95 °C.

The cooling of the heated mixture to form a food concentrate in the form of a gel may be carried out at ambient temperature, preferably the heated mixture is cooled to a temperature of from 5°C to 30°C to form a food concentrate in the form of a gel. If LM-pectin is used, a Ca source may be added in step c. Salt may also be added in step c.
The preparation of food concentrates in the form of a gel is further described in for example, WO 2007/068484, WO 2008/151850, WO 2008/151851, WO 20 2008/151852, WO 2007/068402, WO 2007/068483 and WO 2012/084843.

The invention is further illustrated by the following non-limiting examples. It will be clear to the skilled person how to carry out the invention by using equivalent means without departing from the invention.

### Process to prepare a ready-to-eat food product from the food concentrate

The invention includes a process prepare a ready-to-eat food product from the food concentrate said process comprising the steps of
a) providing a food concentrate according to the invention
b) diluting said food concentrate with a hot aqueous phase with a dilution ratio of at least 5 times to form a ready -to-eat food product.

### Examples

Food concentrates according to table 1 with different levels of oil and AITC were prepared. The Aw was 0.9 (45 wt% water) and the pH was 5. The amount of salt was 6.7 wt% (by weight of the total food concentrate) respectively 13 wt% (by weight of the water content of the food concentrate). The aim was to optimise the antimicrobial effect of AITC in concentrate with high salt and Aw.

| **Table 1 Food concentrates with AITC** | |
|---|---|
| ingredients | % |
| NaCl | 6,7 |
| Sucrose | 3 |
| water | 45 |
| Maltextract | 4 |
| Yeastextract | 0,4 |
| glucose | 2 |
| Oil | 35, 10, 3.5 |
| AITC | 0, 10, 25, 50 ppm |
| Xanthan | 0,39 |
| Locus Bean Gum (LBG) | 0,17 |
| Glucose syrup | Balance |

The concentrates were prepared with the following process.
1. Water was added into a vessel (Thermomix)
2. All ingredients except for the gelling agents were mixed with the water at 25°C
3. Xanthan and LBG were admixed thereto on high speed still homogeneous
4. pH was set to pH 5 (with HCI or NaOH)
5. The mixture was heated up to 80°C and kept at 80°C for 10min.
6. The heated mixture was hot filled into glass jars and the jars were capped.
7. The concentrates were allowed to form a gel at 25° C for 24h.

After the preparation the food concentrates according to table 1 were inoculated with a log 3 cocktail of 8 different species/strains of yeast and 8 different species/strains of moulds each with a known tolerance against low Aw and high salt. WO201446258 disclosed that above 40 wt% water and an Aw of 0.84 100ppm AITC was ineffective in a curry roux concentrate. Liu and Yang reported that AITC was more effective in a composition with with 30% oil compared to 10 wt% oil. Surprisingly, the present results showed that while the samples with 0 ppm showed microbial growth, the inhibitory effect of AITC was increased at oil ranges of 10 and 3.5 % oil at concentrations far lower than 100 ppm. In food concentrates with 3.5% and 10 wt% of oil, the inhibitory effect of AITC was superior to samples with 35% oil. The inhibitory effect was observed when the samples were evaluated after one month and the inhibitory effect was unchanged for at least 3 months.

## Claims

1. A food concentrate for preparing a ready-to-eat product after dilution with a hot aqueous phase, said concentrate having an Aw of 0.60 to 0.90 comprising
a) 45%-80 wt%, preferably at least 50 wt% of water by weight of the total food concentrate
b) at least 6.5 wt% of salt by weight of the total food concentrate ; whereby the amount of salt is at least 10 wt% of salt when expressed by weight of the water content of the food concentrate;
c) 1-40 wt% of taste imparting ingredients by weight of the total food concentrate;
d) 5-55 ppm of allyl isothiocyanate (AITC);
e) 1-15 wt% preferably 2-10 wt% of oil by weight of the total food concentrate;
f) an effective amount of gelling system such that the concentrated food product is in the form of a gel.

2. A food concentrate according to claim 1 comprising at most 65 wt% water, more preferably at most 55 wt% water by weight of the total food concentrate.

3. A food concentrate according to anyone of the preceding claims comprising 10-35 ppm, more preferably 15 - 30 ppm of allyl isothiocyanate (AITC).

4. A food concentrate according to anyone of the preceding claims, wherein the gelling system is selected from the group consisting of gelatinised modified starch, gelatine combined with gelatinised starch, xanthan gum combined with a glucomannan, xanthan gum combined with a galactomannan, xanthan gum combined with carrageenan, carrageenan, agar-agar, low-methoxy pectin and mixtures thereof.

5. A food concentrate according to anyone of the preceding claims, wherein the gelling system comprises the combination xanthan gum and locust bean gum.

6. A food concentrate according to any one of the preceding claims wherein the ratio of the elastic modulus to the viscous modulus G'/G" is higher than 1, preferably higher than 2, more preferably higher than 5.

7. A food concentrate according to any one of the preceding claims having pH is at least 3.5, preferably at least 4, preferably at least 4.5, preferably at most 9, more preferably at most 8.

8. A process to prepare a food concentrate according to any one of the preceding claims, the process comprising the steps of:
a) Mixing at least part of the water and gelling system of the food concentrate to form a mixture
b) Applying a heating step to the mixture to activate the gelling system
c) Optionally mixing any remaining ingredients of the food concentrate with the heated mixture
d) Optionally applying a second heating step
e) Allowing the heated mixture to cool to form a food concentrate in the form of a gel.

9. Process according to claim 8, wherein the heated mixture is cooled to a temperature of from 5°C to 30°C to form a food concentrate in the form of a gel.

10. A process to prepare a ready-to-eat food product said process comprising the steps of
a) providing a food concentrate according to any one of claims 1 to 6
b) diluting said food concentrate with a hot aqueous phase with a dilution ratio of at least 5 times to form a ready-to-eat food product.

## Patentansprüche

1. Lebensmittelkonzentrat zur Herstellung eines verzehrfertigen Produktes nach Verdünnen mit einer heißen wässrigen Phase, wobei das Konzentrat einen Aw-Wert von 0,60 bis 0,90 aufweist, umfassend
a) 45-80 Gew.-%, vorzugsweise mindestens 50 Gew.-% Wasser, bezogen auf das Gewicht des gesamten Lebensmittelkonzentrats,
b) mindestens 6,5 Gew.-% Salz, bezogen auf das Gewicht des gesamten Lebensmittelkonzentrats, wobei die Menge des Salzes mindestens 10 Gew.-% Salz beträgt, wenn auf das Gewicht des Wassergehalts des Lebensmittelkonzentrats bezogen wird,
c) 1-40 Gew.-% geschmacksverleihende Bestandteile, bezogen auf das Gewicht des gesamten Lebensmittelkonzentrats,
d) 5-55 ppm Allylisothiocyanat (AITC),
e) 1-15 Gew.-%, vorzugsweise 2-10 Gew.-% Öl, bezogen auf das Gewicht des gesamten Lebensmittelkonzentrats,
f) eine wirksame Menge Geliersystem, so dass das konzentrierte Lebensmittelprodukt in Form eines Gels vorliegt.

2. Lebensmittelkonzentrat nach Anspruch 1, umfassend höchstens 65 Gew.-% Wasser, bevorzugter höchstens 55 Gew.-% Wasser, bezogen auf das Gewicht des gesamten Lebensmittelkonzentrats.

3. Lebensmittelkonzentrat nach irgendeinem der vorhergehenden Ansprüche, umfassend 10-35 ppm, bevorzugter 15-30 ppm Allylisothiocyanat (AITC).

4. Lebensmittelkonzentrat nach irgendeinem der vorhergehenden Ansprüche, wobei das Geliersystem aus der Gruppe ausgewählt ist, die besteht aus gelierter modifizierter Stärke, mit gelierter Stärke kombinierter Gelatine, mit einem Glucomannan kombiniertem Xanthangummi, mit einem Galactomannan kombiniertem Xanthangummi, mit Carrageen kombiniertem Xanthangummi, Carrageen, Agaragar, Pektin mit einem geringen Methoxygehalt und Mischungen davon.

5. Lebensmittelkonzentrat nach irgendeinem der vorhergehenden Ansprüche, wobei das Geliersystem die Kombination Xanthangummi und Johannesbrotgummi umfasst.

6. Lebensmittelkonzentrat nach irgendeinem der vorhergehenden Ansprüche, wobei das Verhältnis des Elastizitätsmoduls zu dem Viskositätsmodul G'/G" höher als 1, vorzugswiese höher als 2, bevorzugter höher als 5 ist.

7. Lebensmittelkonzentrat nach irgendeinem der vorhergehenden Ansprüche, das einen pH von mindestens 3,5, vorzugsweise mindestens 4, vorzugsweise mindestens 4,5, vorzugsweise höchstens 9, bevorzugter höchstens 8, aufweist.

8. Verfahren zur Herstellung eines Lebensmittelkonzentrats nach irgendeinem der vorhergehenden Ansprüche, wobei das Verfahren die Schritte umfasst:
a) Mischen mindestens eines Teils des Wassers und des Geliersystems des Lebensmittelkonzentrats, um eine Mischung zu bilden,
b) Anwenden eines Erhitzungsschritts auf die Mischung, um das Geliersystem zu aktivieren,
c) fakultatives Mischen beliebiger verbleibender Bestandteile des Lebensmittelkonzentrats mit der erhitzten Mischung,
d) fakultatives Anwenden eines zweiten Erhitzungsschritts,
e) Abkühlenlassen der erhitzten Mischung, um ein Lebensmittelkonzentrat in Form eines Gels zu bilden.

9. Verfahren nach Anspruch 8, wobei die erhitzte Mischung auf eine Temperatur von 5°C bis 30°C gekühlt wird, um ein Lebensmittelkonzentrat in Form eines Gels zu bilden.

10. Verfahren zur Herstellung eines verzehrfertigen Lebensmittelprodukts, wobei das Verfahren die Schritte umfasst:
a) Bereitstellen eines Lebensmittelkonzentrats nach irgendeinem der Ansprüche 1 bis 6,
b) Verdünnen des Lebensmittelkonzentrats mit einer heißen wässrigen Phase mit einem mindestens 5-fachen Verdünnungsverhältnis, um ein verzehrbereites Lebensmittelprodukt zu bilden.

## Revendications

1. Concentré alimentaire pour préparer un produit prêt à être consommé après dilution avec une phase aqueuse chaude, ledit concentré ayant une valeur Aw de 0,60 à 0,90 comprenant
a) 45 % -80 % en masse, de préférence au moins 50 % en masse d'eau en masse du concentré alimentaire total
b) au moins 6,5 % en masse de sel en masse du concentré alimentaire total ; la quantité de sel est par-là d'au moins 10 % en masse de sel lorsqu'elle est exprimée en masse de la teneur en eau du concentré alimentaire ;
c) 1-40 % en masse d'ingrédients communiquant du goût en masse du concentré alimentaire total ;
d) 5-55 ppm d'isothiocyanate d'allyle (AITC) ;
e) 1-15 % en masse de préférence 2-10 % en masse d'huile en masse du concentré alimentaire total ;
f) une quantité efficace de système gélifiant telle que le produit alimentaire concentré est dans la forme d'un gel.

2. Concentré alimentaire selon la revendication 1 comprenant au plus 65 % en masse d'eau, encore mieux au plus 55 % en masse d'eau en masse du concentré alimentaire total.

3. Concentré alimentaire selon l'une quelconque des revendications précédentes comprenant 10-35 ppm, encore mieux 15-30 ppm d'isothiocyanate d'allyle (AITC).

4. Concentré alimentaire selon l'une quelconque des revendications précédentes, dans lequel le système gélifiant est choisi dans le groupe consistant en amidon modifié gélatinisé, gélatine combinée avec de l'amidon gélatinisé, gomme xanthane combinée avec du glucomannane, gomme xanthane combinée avec du galactomannane, gomme xanthane combinée avec du carraghénane, carraghénane, agar-agar, méthoxy pectine de faible masse moléculaire et mélanges de ceux-ci.

5. Concentré alimentaire selon l'une quelconque des revendications précédentes, dans lequel le système gélifiant comprend la combinaison de gomme xanthane et de gomme de caroube.

6. Concentré alimentaire selon l'une quelconque des revendications précédentes dans lequel le rapport du module élastique au module visqueux G'/G" est supérieur à 1, de préférence supérieur à 2, encore mieux supérieur à 5.

7. Concentré alimentaire selon l'une quelconque des revendications précédentes ayant un pH qui est d'au moins 3,5, de préférence d'au moins 4, de préférence d'au moins 4,5, de préférence d'au plus 9, encore mieux d'au plus 8.

8. Procédé pour préparer un concentré alimentaire selon l'une quelconque des revendications précédentes, le procédé comprenant les étapes de :
a) mélange d'au moins une partie de l'eau et d'un système gélifiant du concentré alimentaire pour former un mélange
b) application d'une étape de chauffage au mélange pour activer le système gélifiant
c) mélange éventuel des ingrédients restants du concentré alimentaire avec le mélange chauffé
d) application éventuelle d'une seconde étape de chauffage
e) laisser le mélange chauffé refroidir pour former un concentré alimentaire dans la forme d'un gel.

9. Procédé selon la revendication 8, dans lequel le mélange chauffé est refroidi à une température de 5°C à 30°C pour former un concentré alimentaire dans la forme d'un gel.

10. Procédé pour préparer un produit alimentaire prêt à être consommé ledit procédé comprenant les étapes de
a) fourniture d'un concentré alimentaire selon l'une quelconque des revendications 1 à 6
b) dilution dudit concentré alimentaire avec une phase aqueuse chaude avec un rapport de dilution d'au moins 5 fois pour former un produit alimentaire prêt à être consommé.
